# EUROPÄISCHE PATENTANMELDUNG

(11) **EP 2 003 757 A1**
(43) Veröffentlichungstag der Anmeldung: **17.12.2008**
(21) Anmeldenummer: 07110390.7
(22) Anmeldetag: 15.06.2007
(51) Int. Cl.: H02G 3/22, H02G 15/013

(54) **Erdleiterdurchführung**

(71) Anmelder: Hauff-Technik GmbH & Co. KG, 89542 Herbrechtingen (DE)
(72) Erfinder: Herbst, Reiner, 89551 Königsbronn-Zang (DE)
(74) Vertreter: Szynka, Dirk

(57) **Zusammenfassung**

Ein erfindungsgemäßer Erdleiterdurchführungsbausatz beinhaltet ein in einer Wand einzufügendes, insbesondere einzubetonierendes, Isolierteil (1, 2) mit einem Durchgang und einen metallischen Erdleiter (4), der nach dem Einfügen in die Wand durchführbar ist, um die metallische Verbindung der Erdleiterdurchführung herzustellen.

## Beschreibung

Diese Erfindung bezieht sich auf ein Verfahren zum Durchführen einer Erdleitung durch eine Wand und einen hierfür ausgelegten Bausatz.

Bei Gebäuden unterschiedlichster Art tritt regelmäßig das Problem auf, elektrische Leiter für eine Erdung, zum Potentialausgleich oder für Blitzschutzanlagen durch Gebäudewände hindurchzuführen. Hierzu sind Erdleiterdurchführungen in verschiedenen Bauformen bekannt und werden im Markt angeboten. Je nach den individuellen Anforderungen kommt es dabei auf eine mehr oder weniger aufwändige Abdichtung der Durchführung, d. h. Beibehaltung der Dichtheit der Wand, auf günstige und flexible Anschlussmöglichkeiten insbesondere an den Durchführungsenden und auf Isolationsfestigkeit an. Insbesondere wird unterschieden zwischen innerhalb der Wand gegenüber der Wand nicht isolierten Durchführungen, bei denen beispielsweise zwischen dem Erdleiter und einer in der Wand zufällig berührten Armierung ein elektrischer Kontakt besteht, und isolierten Durchführungen, bei denen der Erdleiter gegenüber der Wand zuverlässig isoliert ist. Letztere werden beispielsweise für den Bau elektrischer Transformator- oder Verteilerstationen eingesetzt.

Der vorliegenden Erfindung liegt das technische Problem zugrunde, ein verbessertes Verfahren zum isolierten Durchführen einer Erdleitung durch eine Wand und einen entsprechenden Bausatz anzugeben.

Die Erfindung richtet sich auf einen Erdleiterdurchführungsbausatz mit einem in eine Wand einzufügenden Isolierteil mit einem Durchgang in einer Längsrichtung und einem metallischen Erdleiter, der durch den Durchgang durchführbar ist,
sowie auf ein diesem Bausatz entsprechendes Verfahren mit den Schritten: Einfügen eines Isolierteils in die Wand und daraufhin Durchführen eines metallischen Erdleiters durch das Isolierteil, wobei das Isolierteil den Erdleiter gegenüber der Wand isoliert.

Bevorzugte Ausgestaltungen sind in den abhängigen Ansprüchen angegeben und werden im Folgenden erläutert. Die einzelnen Merkmale beziehen sich dabei auf beide Kategorien der Erfindung, d. h. auf das Verfahren und auf den Bausatz. Mitoffenbart wird außerdem eine fertig montierte Erdleiterdurchführung in der Wand sowie ein Verfahren zum Erden einer elektrischen Einrichtung durch eine Wand hindurch. Auch diese Aspekte sollen mit allen offenbarten Merkmalen kombinierbar sein.

Die Grundidee der Erfindung liegt darin, den Bausatz in einen Isolierteil mit einem Durchgang und einen metallischen Erdleiter aufzuteilen, wobei letzterer durch den Durchgang hindurchgeführt werden kann, wenn das Isolierteil in die Wand eingefügt ist. Die Montage erfolgt also zunächst nicht mit der vollständigen Durchführung, sondern nur mit ihrem Isolierteil. Beispielsweise wird dieses in eine Betonwand einbetoniert, also vorab an einer Schalung befestigt oder in anderer Weise fixiert angeordnet und dann eingegossen. Erst danach wird der eigentliche metallische Erdleiter durch das in die Wand eingefügte Isolierteil hindurchgeführt, um die eigentliche Erdleiterdurchführung vollständig herzustellen.

Damit kann bei dem Einfügen, etwa Einbetonieren, in die Wand ohne Rücksicht auf die metallische Leiterkomponente und umgekehrt bei der Auslegung des metallischen Erdleiters selbst unabhängig von dem Schritt des Einfügens in die Wand vorgegangen werden. Insbesondere können einerseits einfach aufgebaute und andererseits relativ massive Isolierteile verwendet werden. Die im Stand der Technik bekannten Pulverbeschichtungen von Edelstahlteilen zur Isolierung entfallen damit. Gegenüber Pulverbeschichtungen werden somit nicht nur Kostenvorteile erreicht, sondern vor allem auch eine deutliche Verstärkung der Isolierfestigkeit und vor allem eine grundsätzliche Unempfindlichkeit gegenüber kleineren Transportschäden oder Kratzern, die bei isolierenden Pulverbeschichtungen im schlechtesten Fall eine Nichterfüllung der elektrischen Normen zur Folge haben können. Das Isolierteil kann sowohl in einer einstückigen also auch in einer mehrteiligen Ausführung einfach und pragmatisch aufgebaut sein und führt zu geringen Kosten. Die relativ teuren metallischen Werkstoffe bleiben auf den eigentlichen Erdleiter beschränkt. Dadurch werden ferner Gewicht und Transportkosten gespart. Ferner ist es möglich, zunächst das Isolierteil einzufügen, insbesondere einzubetonieren, und dann erst die Auswahl zwischen verschiedene infrage kommenden Leiterstücken zu treffen. Damit können unterschiedliche geometrische Varianten, etwa mit verschiedenen Anschlussmodifikationen, insbesondere aber auch verschiedene Materialien zur Auswahl stehen, etwa verschiedene Stähle. Beispielsweise kann zwischen einem nicht-rostfreien Baustahl wie ST37 und einem Edelstahl wie V2A oder V4A ausgewählt werden, je nach Anforderung.

Bei einer bevorzugten Ausführung besteht das Isolierteil aus einem isolierenden Material wie einem Kunststoff oder auch Keramik o. Ä. Es sind auch Beton- oder Zementteile denkbar. Der Baustoff sollte eine gute Formstabilität aufweisen, so dass sich das Isolierteil bei der Verarbeitung ohne Veränderungen seiner Form leicht handhaben lässt, etwa durch Nageln an Schalungsteilen befestigen lässt, ohne hinsichtlich der gewünschten Geometrie dabei oder danach wegen Formveränderungen neu ausgerichtet werden zu müssen. Gummielastische oder anderweitig leicht verformbare Werkstoffe kommen also nur weniger bevorzugt in Betracht.

Das Isolierteil kann mehrteilig sein. Insbesondere kann es im Wesentlichen rohrförmig sein und zumindest zwei Rohrteile aufweisen, die in axialer Richtung, d. h. in der Längsrichtung der Erdungsleitung, aufeinanderfolgend anzuordnen sind. Dabei kann zwischen zumindest zweien der Rohrteile auch eine Verstelleinrichtung gegeben sein, etwa ein Gewinde oder ein Teleskopmechanismus, so dass die Gesamtlänge des Isolierteils individuell verstellt und damit an verschiedenen Wandstärken angepasst werden kann. Darüber hinaus oder alternativ können auch modulare Bauformen vorgesehen sein, die unter Hinzufügung oder Weglassung modularer Rohrteile Baulängenanpassungen gestatten.

Weiterhin kann das Isolierteil zumindest einen, vorzugsweise zwei Flansche aufweisen, die sich quer zu der Längsrichtung und ggf. quer zu der axialen Richtung der erwähnten Rohrteile erstrecken. Diese Flansche können insbesondere zur Anlage auf der Wand von außen ausgestaltet sein und weitere, im Folgenden noch erläuterte Merkmale aufweisen. So können die Flansche Löcher für Befestigungszwecke enthalten, beispielsweise zum Annageln an Betonschalungselemente, und/oder Ausnehmungen zum Eingriff mit einem Flachbandanschluss. Eine solche Ausnehmung kann einen Formschluss mit einem Flachbandanschluss herstellen, um diesen verdrehsicher auf dem Erdleiter zu halten. Bei dem Flachbandanschluss kann es sich dabei um eine Kreuzklemme handeln, also einen Kombination eines Flachbandanschlusses mit einem weiteren Klemmanschluss, beispielsweise für einen stabförmigen Leiter.

Insbesondere beim Betonieren kann es sehr vorteilhaft sein, das Isolierteil zunächst rundum zu schließen, um den Durchgang zu schützen. Er könnte sonst mit Betonmilch oder gar Beton voll laufen. Auch bei anderen Vorgehensweisen, etwa beim Einmauern, kann es sinnvoll sein, den Durchgang vor Verschmutzungen zu bewahren. Bei einer entsprechenden Ausgestaltung ist der Bausatz mit entsprechenden Verschlüssen des Durchganges des Isolierteils ausgestattet, beispielsweise mit Folien. Aus diesem Grund und auch wegen der Befestigung über den erwähnten Flansch sind Schalungsscheiben nicht zwingend notwendig.

Auch bei der fertiggestellten Erdleiterdurchführung spielen Dichtheitserwägungen eine Rolle. So ist vorteilhafterweise eine Abdichtung des Zwischenraumes zwischen Erdleiter und Isolierteil an den jeweiligen Enden in Leitungsrichtung vorgesehen, und zwar vorzugsweise über einen jeweiligen Elastomerring. Hierzu kann eine Ausnehmung vorgesehen sein, in die der Elastomerring so passt, dass sich bei einer axialen bzw. in Längsrichtung erfolgenden Verpressung des Elastomerrings nicht nur eine dichtende Anlage in der Längsrichtung, d. h. mit einer senkrecht dazu orientierten Dichtfläche, sondern auch sozusagen eine radiale, also mit einer parallel zu der Längsrichtung liegenden, insbesondere gewölbten, Dichtfläche ergibt. Beispielsweise kann der Elastomerring radial ausweichen und sich damit an eine schmale Zylindermantelinnenfläche als Rand der Ausnehmung anlegen. Die Verpressung kann beispielsweise durch eine mit einer Schraube aufgepresste Beilagscheibe erfolgen, so dass sich auch axial, also mit einer im Wesentlichen ebenen Dichtfläche senkrecht zur Längsrichtung, eine dichtende Anlage ergibt. Auch Geldichtungen sind hier möglich.

Auch innerhalb der Wand kann eine Dichtung vorgesehen sein, und zwar vorzugsweise ein Dichtungsring an einer Außenmantelfläche des Isolierteils. Dieser Dichtungsring liegt dann an einem Innenwandstück der Wand selbst an bzw. ist in die Wand eingegossen. Bei eingegossenen Isolierteilen ergibt sich die Dichtungswirkung durch die Verlängerung des Kriechweges und die Richtungsumlenkung; bei anderweitig in ein Wandloch eingesetzten Isolierteilen ggf. durch eine Anlage an der Lochinnenwand unter Druck. Der Dichtungsring kann bei einer bevorzugten Ausgestaltung angespritzt sein; es kann sich aber auch um einen separaten Elastomerring handeln, der entsprechend aufgesetzt oder in eine angepasste Nut eingesetzt wird.

Der Erdleiter selbst weist vorzugsweise an zumindest einem seiner beiden Längsrichtungsenden ein Außengewinde zur Montage weiterer Teile, insbesondere elektrischer Anschlüsse, auf. Bei einer besonders vorteilhaften Ausgestaltung ist der Erdleiter durch eine Gewindestange gebildet. Diese ist als Meterware preiswert und weist über ihre gesamte Länge ein Gewinde auf. Man kann natürlich auch ein einfache zylindrische Stange verwenden und mit endseitigen Gewinden versehen, was jedoch im Regelfall höhere Kosten als ein Gewindestangenstück erzeugen wird.

Im Folgenden wird die Erfindung anhand eines Ausführungsbeispiels näher erläutert, wobei die einzelnen Merkmale auch in anderen Kombinationen erfindungswesentlich sind und sich auf sämtliche Kategorien der Erfindung beziehen.
- Figur 1: zeigt einen Längsschnitt durch eine erfindungsgemäße Erdleiterdurch-führung als erstes Ausführungsbeispiel.
- Figur 2: zeigt eine Frontansicht des ersten Ausführungsbeispiels aus Figur 1 und auch einer erfindungsgemäßen Erdleiterdurchführung eines in den Figuren 3-5 näher dargestellten zweiten Ausführungsbeispiels.
- Figur 3: zeigt eine Seitenansicht des zweiten Ausführungsbeispiels.
- Figur 4: zeigt einen Längsschnitt des zweiten Ausführungsbeispiels.
- Figur 5: zeigt eine perspektivische Ansicht des zweiten Ausführungsbeispiels.

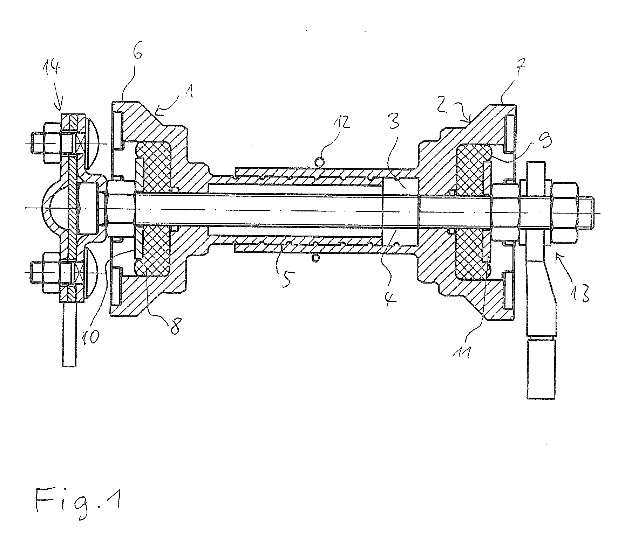

In Figur 1 ist ein erstes Ausführungsbeispiel dargestellt. Der erfindungsgemäße Erdleiterdurchführungsbausatz ist hier bereits zusammengebaut. 1 bezeichnet dabei einen in Figur 1 linken Rohrteil eines Isolierteils, 2 den rechten Rohrteil des Isolierteils. Beide weisen gemeinsam einen in Figur 1 horizontal liegenden Durchgang auf, dessen mittlerer, etwas erweiteter Bereich mit 3 bezeichnet ist und durch den der Länge nach ein metallischer Erdleiter 4 in Form einer M12 Gewindestange hindurchgesteckt ist. Auf die jeweils aus dem Isolierteil 1, 2 herausragenden Enden der Gewindestange 4 sind verschiedene Anschlussteile aufgeschraubt, auf die weiter unten eingegangen wird.

Die beiden Rohrteile 1, 2 des Isolierteils haben eine fast spiegelsymmetrische Entsprechung mit Ausnahme einer in ihrem Überlappungsbereich vorgesehenen Verstelleinrichtung 5. Es handelt sich bei der Verstelleinrichtung um eine Rastverstelleinrichtung mit einem Teleskopmechanismus. Die Rastverbindung ist dabei verdrehsicher und kann durch kräftiges Zusammenschieben und Auseinanderziehen verstellt werden. Genauso wären auch Schraubgewinde oder andere Verstelleinrichtungen möglich.

Diese trichterförmig aufgeweiteten Bereiche der Rohrteile 1, 2 bilden Flansche 6, 7, die jeweils axial nach außen weisende Ausnehmungen aufweisen, durch die die Gewindestange 4 nach außen hervorragt. In diesen Ausnehmungen ist jeweils ein Elastomerring 8, 9 vorgesehen, der jeweils von einer Beilagscheibe 10, 11 und einer diese axial nach innen beaufschlagenden Schraubmutter auf der Gewindestange 4 nach innen gepresst wird. Dabei wird das Elastomermaterial der Ringe 8, 9 nicht nur axial nach innen verpresst, sondern auch verdrängt und weicht wegen der geringeren radialen Größe der Beilagscheiben 10 und 11 im Vergleich zu den Elastomerringen 8 und 9 auch radial nach außen aus, wie die zeichnerisch dargestellten Auswölbungen andeuten. Diese entstehen durch die radiale Anlage der Elastomerringe 8, 9 an den Zylindermantelinnenflächen der Ausnehmungen in den Flanschen 6, 7, die das radiale Ausweichen begrenzen. Insgesamt entsteht also durch die Kraftbeaufschlagung über die Muttern und die Beilagscheiben 10, 11 eine sowohl axial als auch radial dichtende Anlage zwischen den Elastomerringen 8, 9 und den Flanschen 6 und 7.

Ferner ist eine in Figur 1 symbolisch angedeutete Ringdichtung 12 an dem Außenmantel des Rohrstücks des Rohrteils 2 des Isolierteils vorgesehen.

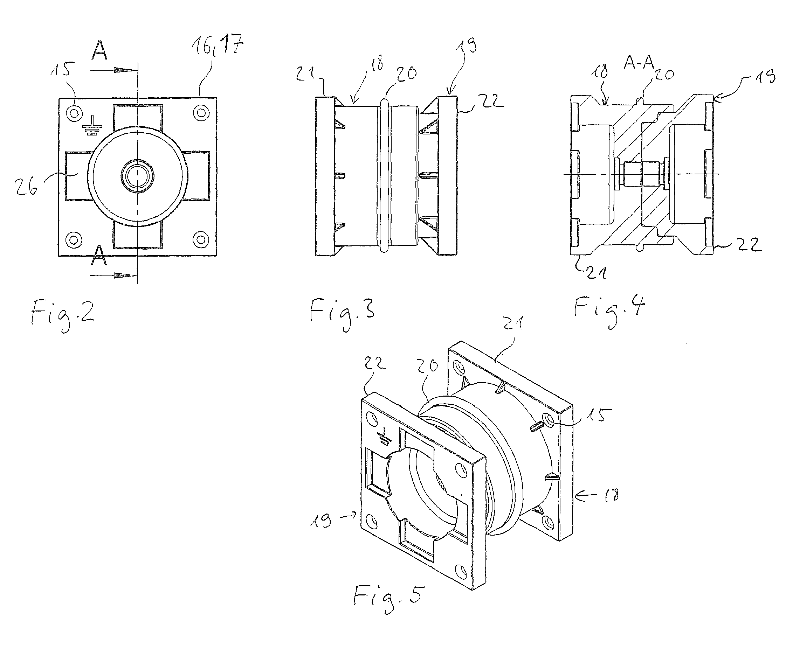

Der Bausatz wird im Wesentlichen wie folgt montiert: Die beiden Rohrteile 1 und 2 sind zunächst an ihren Außenseiten mit einer nicht dargestellten Folie verschlossen, so dass die Ausnehmungen in den Flanschen 6, 7 abgedeckt sind. In diesem Zustand wird die axiale Länge der Durchführung eingestellt, indem die beiden Rohrteile 1, 2 gegeneinander verschoben werden. Die Verstelleinrichtung 5 rastet in der gewählten Position ein. Dann kann das Isolierteil 1, 2 über (in Figur 2 gezeigte, in Figur 1 nicht dargestellte) Löcher in den Flanschen 6, 7 beispielsweise an der Innenseite einer Betonverschalung befestigt werden, etwa indem das erste Rohrteil 1 angenagelt wird. Bei richtiger axialer Längeneinstellung liegt damit die axiale Außenseite des zweiten Rohrteils 2 bzw. des Flansches 7 relativ passgenau vor der gegenüberliegenden Verschalungswand. Dabei ist die Ringdichtung 12 bereits vorgesehen. Nach dem Fertigstellen des Betongießens und dem Abbauen der Verschalung ist das Isolierteil 1, 2 damit einbetoniert, so dass der Durchgang 3 durch die Betonwand frei ist und gegenüber der Betonwand und darin befindlichen Armierungen isoliert ist. Nun können die Folien auf den Flanschaußenseiten abgezogen werden. Dann kann die Gewindestange 4 als metallischer Erdleiter hindurchgeführt werden, können von beiden Seiten die Elastomerringe 8, 9 und die Beilagscheiben 10, 11 sowie die zugehörigen Muttern aufgebracht und festgezogen werden. Die Ringdichtung 12 dichtet dabei in der axialen Richtung zusätzlich ab, so dass kleine Fehlpassungen und Spielräume zwischen dem Isolierteil 1, 2 und der Betonwand keine Undichtigkeit hervorrufen. Die Ringdichtung 12 kann dazu natürlich besonders ausgestaltet sein, was aber für die vorliegende Erfindung keine wesentliche Rolle spielt.

Nun können an die überstehenden Enden der Gewindestange 4 Anschlussstücke angebracht werden, und zwar in Figur 1 rechts ein an sich bekannter Kabelschuhanschluss als Innenanschluss eines Gebäudes, hier mit 13 bezeichnet, und in Figur 1 links als Außenanschluss ein Anschlussteil für Flach- oder Rundstahl zum Anschluss an eine Erdungsanlage nach DIN EN 50164-2 (VDE 0185 Teil 202). Hierbei kann es sich vorzugsweise um eine sog. Kreuzklemme handeln. Sie ist in Figur 1 mit 14 bezeichnet.

Figur 2 zeigt eine Frontansicht eines Flansches 6 oder 7 aus Figur 1 oder auch eines entsprechenden Flansches 16 oder 17 des in Figur 3 - 5 dargestellten zweiten Ausführungsbeispiels. Man erkennt die bereits erwähnten Befestigungslöcher für die Betonverschalung, hier mit 15 bezeichnet. Ferner erkennt man eine kreuzförmige Hohlausnehmung 26 in dem Flansch 16 oder 17, die zum Formschluss mit anzusetzenden Anschlussteilen, etwa der Kreuzklemme 14 aus Figur 1 oder einer ähnlichen Kreuzklemme, dient. Hier kann eine verdrehsichere Kopplung zwischen Flansch 16, 17 und Kreuzklemme 14 hergestellt werden. Im Übrigen erkennt man innerhalb dieser Ausnehmung 26 die kreiszylinderförmige Ausnehmung für Elastomerdichtungen entsprechend den in Figur 1 dargestellten Dichtungen 8, 9.

Die Figuren 3 und 4 zeigen das zweite Ausführungsbeispiel in Seitenansicht, und zwar in einer Figur 1 entsprechenden Orientierung mit horizontal liegender Längsachse, und in einem in Figur 2 vermerkten Schnitt A-A.

Beide Rohrteile 18, 19 weisen wieder außenliegende Flansche auf, hier mit einem geringeren radialen Unterschied zwischen den inneren Rohrstücken und den äußeren Flanschen, die in Figur 3 und 4 mit 21 und 22 bezeichnet sind. Die Gewindestange 4 ist hier weggelassen, würde sich aber im Wesentlichen in gleicher Weise wie in Figur 1 durch die beiden Rohrteile 18, 19 des Isolierteils erstrecken.

Eine Verstelleinrichtung ist hier nicht vorgesehen, vielmehr hat der Bausatz eine feste axiale Länge. Es könnte aber auch ein Gewinde zwischen den Rohrteilen 18 und 19 vorgesehen sein.

Eine Dichtung 20 entspricht der Dichtung 12 aus Figur 1, ist hier aber an dem Rohrteil 18 angespritzt.

Figur 5 zeigt eine perspektivische Ansicht zur Veranschaulichung.

Im Übrigen gelten die Erläuterungen zu dem ersten Ausführungsbeispiel entsprechend.

## Patentansprüche

1. Erdleiterdurchführungsbausatz mit
- einem in eine Wand einzufügenden Isolierteil (1, 2) mit einem Durchgang in einer Längsrichtung und
- einem metallischen Erdleiter (4), der durch den Durchgang durchführbar ist.

2. Erdleiterdurchführungsbausatz nach Anspruch 1, bei dem das Isolierteil (1, 2) aus einem formstabilen isolierenden Stoff, insbesondere einem Kunststoff, besteht.

3. Erdleiterdurchführungsbausatz nach Anspruch 1 oder 2, bei dem das Isolierteil (1, 2) ein Rohrstück mit einer Mehrzahl Rohrteile aufweist, die dazu ausgelegt sind, in zusammengebautem Zustand in der Längsrichtung aufeinander folgend angeordnet zu sein.

4. Erdleiterdurchführungsbausatz nach Anspruch 3 mit einer Verstelleinrichtung zur Verstellung zweier der Rohrteile (1, 2) in der Längsrichtung gegeneinander.

5. Erdleiterdurchführungsbausatz nach einem der vorstehenden Ansprüche, bei dem das Isolierteil (1, 2) zumindest einen sich quer zu der Längsrichtung erstreckenden Flansch (6, 7) aufweist.

6. Erdleiterdurchführungsbausatz nach Anspruch 5, bei dem der Flansch (6, 7) Löcher zur Befestigung, insbesondere an Betonschalungselementen, aufweist.

7. Erdleiterdurchführungsbausatz nach Anspruch 5 oder 6, bei dem der Flansch (6, 7) Ausnehmungen für einen Formschluss mit einem Flachbandanschluss, insbesondere einer Kreuzklemme (14), aufweist, vorzugsweise kreuzförmige Ausnehmungen.

8. Erdleiterdurchführungsbausatz nach einem der vorstehenden Ansprüche, bei dem das Isolierteil (1, 2) rundum geschlossen ist, um den Durchgang beim Einfügen in die Wand, insbesondere beim Einbetonieren, zu schützen.

9. Erdleiterdurchführungsbausatz nach Anspruch 8, bei dem zwei entgegengesetzte Enden des Durchgangs durch eine Folie verschlossen sind.

10. Erdleiterdurchführungsbausatz nach einem der vorstehenden Ansprüche mit zumindest einem Elastomerring (8, 9) zum Abdichten eines in der Längsrichtung endseitigen Zwischenraums zwischen dem Erdleiter (4) und dem Isolierteil (1, 2).

11. Erdleiterdurchführungsbausatz nach Anspruch 10, bei dem das Isolierteil (1, 2) eine auf den Elastomerring (8, 9) abgestimmte Ausnehmung aufweist, wobei der Elastomerring ( 8, 9) und die Ausnehmung dazu ausgelegt sind, durch Verpressung des Elastomerring (8, 9) in der Längsrichtung eine dichtende Anlage in der Längsrichtung und eine weitere dichtende Anlage senkrecht dazu zwischen dem Elastomerring (8, 9) und dem Isolierteil (1, 2) zu erzeugen.

12. Erdleiterdurchführungsbausatz nach einem der vorstehenden Ansprüche mit einem, vorzugsweise angespritzten, Dichtungsring (12) an einer Außenmantelfläche des Isolierteils (1, 2), die im eingebauten Zustand in der Wand angeordnet ist.

13. Erdleiterdurchführungsbausatz nach einem der vorstehenden Ansprüche, bei dem der Erdleiter (4) zumindest ein Außengewinde an zumindest einem seiner Enden in der Längsrichtung aufweist, das nach dem Einbau für elektrische Anschlüsse genutzt werden kann.

14. Erdleiterdurchführungsbausatz nach Anspruch 13, bei dem der Erdleiter eine Gewindestange (4) ist.

15. Verfahren zum Durchführen einer Erdleitung durch eine Wand mit den Schritten
- Einfügen eines Isolierteils (1, 2) in die Wand und
- daraufhin Durchführen eines metallischen Erdleiters (4) durch das lsolierteil (1, 2), wobei das Isolierteil (1, 2) den Erdleiter gegenüber der Wand isoliert.

16. Verfahren nach Anspruch 15 unter Verwendung eines Erdleiterdurchführungsbausatzes nach einem der Ansprüche 1 bis 14.

17. Verfahren nach Anspruch 15 oder 16, bei dem das Isolierteil (1, 2) in der Wand einbetoniert wird.
